# EUROPEAN PATENT APPLICATION

(11) **EP 4 603 904 A1**
(43) Date of publication of application: **20.08.2025**
(21) Application number: 25157901.7
(22) Date of filing: 14.02.2025
(51) Int. Cl.: G02F 1/1335

(54) **SMART WINDOW AND AUTOMOBILE OR WINDOW FOR BUILDING USING THE SAME**

(30) Priority: 19.02.2024 KR 20240023308
(71) Applicant: Dongwoo Fine-Chem Co., Ltd., Iksan-si, Jeollabuk-do 54631 (KR)
(72) Inventor: SONG, In-Kyu, 54631 Iksan-si (KR); KIM, Gil-Woong, 54631 Iksan-si (KR); SHIN, Dong-Wun, 54631 Iksan-si (KR); LIM, Min-Ho, 54631 Iksan-si (KR); BAEK, Sung-Ho, 54631 Iksan-si (KR); OH, Pyoung-Yun, 54631 Iksan-si (KR)
(74) Representative: Betten & Resch

(57) **Abstract**

Disclosed is a smart window including: a first substrate; a first adhesive layer; a second substrate; a second adhesive layer; and an optical laminate embedded between the first adhesive layer and the second adhesive layer, wherein the optical laminate includes: a first polarizing plate; a first transparent conductive layer; a second polarizing plate; a second transparent conductive layer; and a liquid crystal layer provided between the first transparent conductive layer and the second transparent conductive layer, wherein the ratio of the thickness of each of the first adhesive layer and the second adhesive layer to the thickness of the optical laminate is 1.5 to 3.5. The smart window is easy to handle, prevents defects from being generated when bonding the optical laminate to the substrates, and has excellent visibility. Also disclosed is an automobile or a window for a building using the smart window.

## Description

### BACKGROUND

### 1. Technical Field

The present disclosure relates to a smart window and an automobile or a window for a building using the same.

### 2. Related Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed.

Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a smart window capable of changing the transmittance of light when a voltage is applied has been developed.

The smart window is manufactured by interposing between glass substrates an optical laminate that changes transmittance by driving liquid crystals in response to voltage application.

The optical laminate is manufactured to include a polarizing plate and a conductive layer for driving liquid crystals. In this case, if a polarizing plate, which has been used in conventional image display devices such as LCDs, is applied to a smart window, there are problems in that the polarizing plate may be easily bent and damaged during transport due to the absence of supporting substrates, and in that defects such as lifting and pressing defects may be generated due to bonding pressure during bonding of the optical laminate to a substrate, and also in that a wave-like pattern may be visible in the bonded portion due to bonding, which causes problems in terms of visibility.

Korean Patent No. 10-2154513 discloses a smart window with improved transparency and visibility, but does not recognize the above-described problems and does not suggest any solution to the above-described problems.

Accordingly, there is a need to develop a smart window that is easy to handle during manufacturing, is free from concerns about defect generation, and may prevent a decrease in its visibility.

### [Prior Art Documents]

### [Patent Documents]

(Patent Document 1) Korean Patent No. 10-2154513

### SUMMARY

An object of the present invention is to provide a smart window which is free from concerns about damage during transport due to its easy handling and in which no defects are generated when bonding an optical laminate to a substrate.

Another object of the present disclosure is to provide a smart window whose visibility is not reduced, by preventing wave-like stain patterns from occurring when bonding an optical laminate to a substrate.

Still another object of the present disclosure is to provide an automobile or a window for a building using the above-described smart window.

However, the objects of the present disclosure are not limited to the objects mentioned above, and other objects not mentioned will be clearly understood by those skilled in the art from the following description.

The present disclosure relates to a smart window including: a first substrate; a first adhesive layer formed on the first substrate; a second substrate opposite to the first substrate; a second adhesive layer formed on one surface of the second substrate and opposite to the first adhesive layer; and an optical laminate embedded between the first adhesive layer and the second adhesive layer, wherein the optical laminate includes: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein the ratio of the thickness of each of the first adhesive layer and the second adhesive layer to the thickness of the optical laminate is 1.5 to 3.5.

The optical laminate may have a thickness of 0.15 mm to 0.4 mm.

The first substrate and the second substrate may include at least one selected from the group consisting of silicon, quartz, glass, polymer resin, a metal, a metal oxide, and a non-metal oxide.

The first adhesive layer and the second adhesive layer may each have an elastic modulus of 1 to 300 MPa.

At least one of the first polarizing plate and the second polarizing plate may include at least one functional layer selected from the group consisting of a protective layer, a retardation matching layer, and a refractive index-matching layer.

At least one of the first polarizing plate and the second polarizing plate may have a thickness of 30 to 200 µm.

At least one of the first transparent conductive layer and the second transparent conductive layer may be formed in direct contact with the first polarizing plate or the second polarizing plate without including a separate substrate therebetween.

At least one of the first transparent conductive layer and the second transparent conductive layer may be formed in direct contact with the first polarizing plate or the second polarizing plate while including a highly adhesive layer therebetween.

At least one of the first transparent conductive layer and the second transparent conductive layer may include at least one selected from the group consisting of a transparent conductive oxide, a metal, a carbonaceous material, a conductive polymer, a conductive ink, and nanowires.

The liquid crystal driving mode of the liquid crystal layer may be any one selected from the group consisting of a twisted nematic (TN) mode, a super-twisted nematic (STN) mode, an in-plane switching (IPS) mode, a fringe-field switching (FFS) mode, and a vertical alignment (VA) mode.

The liquid crystal driving mode of the liquid crystal layer may be a twisted nematic (TN) mode.

The liquid crystal layer may include a cured product of a composition for forming a liquid crystal layer including a polymerizable monomer and a liquid crystal compound.

The liquid crystal layer may include a polymer network and a liquid crystal compound.

The optical laminate may further include at least one selected from the group consisting of a pressure-sensitive adhesive layer, a UV-absorbing layer, and a hard coating layer.

The present disclosure also relates to an automobile in which the smart window is applied to at least one of a front window, a rear window, a side window, a sunroof window, and an interior partition.

The present disclosure also relates to a window for a building, including the smart window.

The smart window according to the present disclosure is free from concerns about damage during transport due to its easy handling, prevents defects from being generated when bonding the optical laminate to the substrates, and has excellent visibility because wave-like stain patterns are not generated in the bonded portion.

### BRIEF DESCRIPTION OF THE DRAWINGS

FIG. 1 shows the structure of a smart window according to one embodiment of the present disclosure.
FIG. 2 shows an optical laminate included in the smart window according to one embodiment of the present disclosure.
FIGS. 3a to 3e show the laminated structures of polarizing plates according to one or more embodiments of the present disclosure.

### DETAILED DESCRIPTION

The present disclosure relates to a smart window including: a first substrate; a first adhesive layer formed on the first substrate; a second substrate opposite to the first substrate; a second adhesive layer formed on one surface of the second substrate and opposite to the first adhesive layer; and an optical laminate embedded between the first adhesive layer and the second adhesive layer, wherein the optical laminate includes: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein the ratio of the thickness of each of the first adhesive layer and the second adhesive layer to the thickness of the optical laminate is 1.5 to 3.5.

The smart window of the present disclosure may include an optical laminate capable of changing the light transmittance in response to voltage application.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or glass of means of transportation, such as a sunroof.

The optical laminate included in the smart window of the present disclosure may also be used for the smart window in the various technical fields mentioned above, but since the conductive layer is directly formed on the polarizing plate, there is no need to include a separate substrate for forming the conductive layer and the optical laminate has a small thickness and is favorable in terms of flexural properties, and thus the optical laminate of the present disclosure may particularly suitable for use for a smart window for a vehicle or a building. In one or more embodiments, a smart window having applied thereto the optical laminate of the present disclosure may be used as a front window, a rear window, a side window, and a sunroof window of an automobile, or a window for a building, and in addition to being used to block external light, may also be used for partitioning the internal space of an automobile or a building, or for protecting privacy, such as being used as an internal partition.

Hereinafter, embodiments of the present disclosure will be described in more detail with reference to the accompanying drawings. However, the following drawings attached to this specification illustrate preferred embodiments of the present disclosure, and serve to aid in further understanding of the technical idea of the present disclosure together with the contents of the present disclosure described above. Therefore, the present disclosure should not be interpreted as being limited only to matters described in the drawings.

Terms used in the present specification are for purpose of describing embodiments and are not intended to limit the present disclosure. In the present specification, singular forms also include plural forms unless the context clearly indicates otherwise. For example, the term "polarizing plate" as used herein may mean at least one polarizing plate among a first polarizing plate and a second polarizing plate, and the term "transparent conductive layer" may mean at least one transparent conductive layer among a first transparent conductive layer and a second transparent conductive layer.

As used herein, terms such as "comprise", "comprising", "include", and "including" are intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the component in use or operation, in addition to the orientation depicted in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "plane direction" may be interpreted as a direction orthogonal to the polarizing plate and/or the transparent conductive layer, that is, the direction of the user's view.

### <Smart Window>

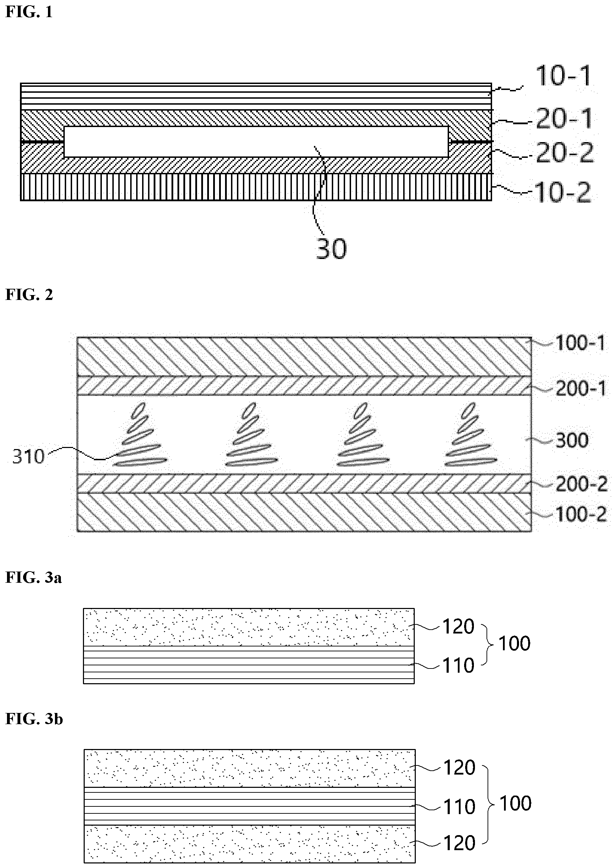

FIG. 1 shows the structure of a smart window according to one embodiment of the present disclosure.

Referring to FIG. 1, a smart window according to one embodiment of the present disclosure may include a first substrate 10-1, a second substrate 10-2, a first adhesive layer 20-1, a second adhesive layer 20-2, and an optical laminate 30.

The first substrate 10-1 and the second substrate 10-2 of the present disclosure are not particularly limited as long as they have transparency and appropriate strength. For example, the first substrate 10-1 and the second substrate 10-2 may include at least one selected from the group consisting of silicon, quartz, glass, a polymer, a metal, a metal oxide, and a non-metal oxide.

The thickness of the substrate 10 is not particularly limited and may be, for example, 0.5 to 5 mm.

The first adhesive layer 20-1 and the second adhesive layer 20-2 of the present disclosure may have an elastic modulus of 1 to 300 MPa, preferably 10 to 100 MPa. When the elastic modulus is within the above range, deformation or damage due to bonding pressure when bonding the optical laminate 30 to the substrate 10 may be prevented, and the surrounding region of the optical laminate 30 may be appropriately filled so that no empty space is generated, and thus appearance defects such as bubbles do not occur.

The ratio of each of the first adhesive layer 20-1 and the second adhesive layer 20-2 to the thickness of the optical laminate 30 may be 1.5 to 3.5, preferably 2 to 3.

In this case, the adhesive layer 20 may fix the optical laminate 30 bonded to the substrate 10 so as not to shake, and may sufficiently protect the optical laminate 30 from heat and moisture.

Since the first adhesive layer 20-1 and the second adhesive layer 20-2 have the elastic modulus described above, when they are bonded to both surfaces of the optical laminate 30, respectively, they may be bonded in a form in which the optical laminate is embedded between them as shown in FIG. 1. In this case, the thickness that serves as a reference for the ratio of the thickness of the adhesive layer 20 to the thickness of the optical laminate 30 may be the thickness of the adhesive layer 20 before the optical laminate 30 is embedded, and considering this fact, it is preferable that the first adhesive layer 20-1 and the second adhesive layer 20-2 each have a thickness of 0.3 mm to 1.3 mm.

When the thickness ratio of the adhesive layer 20 to the optical laminate 30 satisfies the above range, the pressure applied to the optical laminate 30 may be appropriately distributed, and the periphery of the optical laminate 30 may be appropriately covered, and thus the surrounding portion thereof may be filled so that no empty space is generated, thereby preventing defects such as bubbles, stains, and lifting defects in the bonded portion between the optical laminate 30 and the substrate 10.

The adhesive layer 20 may be formed using a conventional or later-developed adhesive. For example, a curable adhesive may be used, and specifically, a thermosetting adhesive or a photocurable adhesive may be used.

The thermosetting adhesive includes a polymer of a thermosetting monomer as a main binder, and may be cured at room temperature or by heating to form an infusible three-dimensional network resin. The thermosetting adhesive may be cured by adding a curing agent or a catalyst, or may be cured by applying pressure.

Examples of the polymer as the main binder include vinyl-based resin, urea-based resin, epoxy-based resin, polyurethane-based resin, etc., and vinyl-based resin is preferable.

The photocurable adhesive exhibits a strong adhesive force by being crosslinked and cured with active energy rays such as ultraviolet (UV) rays and electron beam (EB), and may be composed of a reactive oligomer, a reactive monomer, a photopolymerization initiator, etc.

The reactive oligomer is an important component that determines the properties of the adhesive, and forms a cured coating film by forming a polymer bond through a photopolymerization reaction. Usable reactive oligomers include polyester-based resins, polyether-based resins, polyurethane-based resins, epoxy-based resins, polyacrylic resins, silicone-based resins, and the like.

The reactive monomer acts as a crosslinking agent and diluent for the reactive oligomer and affects the adhesive properties. Usable reactive monomers include monofunctional monomers, polyfunctional monomers, epoxy-based monomers, vinyl ethers, cyclic ethers, and the like.

The photopolymerization initiator acts to initiate photopolymerization by absorbing light energy to generate radicals or cations. An appropriate photopolymerization initiator selected depending on the photopolymerization resin may be used.

The adhesive may be a conventional or later-developed adhesive. In one or more embodiments, the adhesive may be an acrylic adhesive, a rubber-based adhesive, a silicone-based adhesive, a urethane-based adhesive, a polyvinyl alcohol-based adhesive, a polyvinyl pyrrolidone-based adhesive, a polyacrylamide-based adhesive, a cellulose-based adhesive, a vinyl alkyl ether-based adhesive, or the like.

The adhesive is not particularly limited as long as it may provide the above-described elastic modulus. However, the adhesive may preferably be an acrylic adhesive from the viewpoint of easy availability, etc., and may include, for example, a (meth)acrylate copolymer, a crosslinking agent, a solvent, and the like.

The crosslinking agent may be a conventional or later-developed crosslinking agent, and may include, for example, a polyisocyanate compound, an epoxy resin, a melamine resin, a urea resin, a dialdehyde, a methylol polymer, etc. Preferably, it may include a polyisocyanate compound.

The solvent may include a solvent commonly used in the field of resin compositions, and examples thereof include alcoholic compounds such as methanol, ethanol, isopropanol, butanol, and propylene glycol methoxy alcohol; ketone-based compounds such as methyl ethyl ketone, methyl butyl ketone, methyl isobutyl ketone, diethyl ketone, and dipropyl ketone; acetate-based compounds such as methyl acetate, ethyl acetate, butyl acetate, and propylene glycol methoxy acetate; cello solve-based compounds such as methyl cellosolve, ethyl cellosolve, and propyl cellosolve; and hydrocarbon-based compounds such as hexane, heptane, benzene, toluene, and xylene. These solvents may be used alone or in combination of two or more.

Referring to FIG. 2, an optical laminate 30 according to one embodiment of the present disclosure may include a first polarizing plate 100-1, a second polarizing plate 100-2, a first transparent conductive layer 200-1, a second transparent conductive layer 200-2, and a liquid crystal layer 300.

Referring to FIGS. 3a to 3e, the polarizing plate 100 includes a polarizer 110, and may further include a functional layer, such as a protective layer 120, a retardation matching layer 130, or a refractive index-matching layer 140, on one or both surfaces of the polarizer 110.

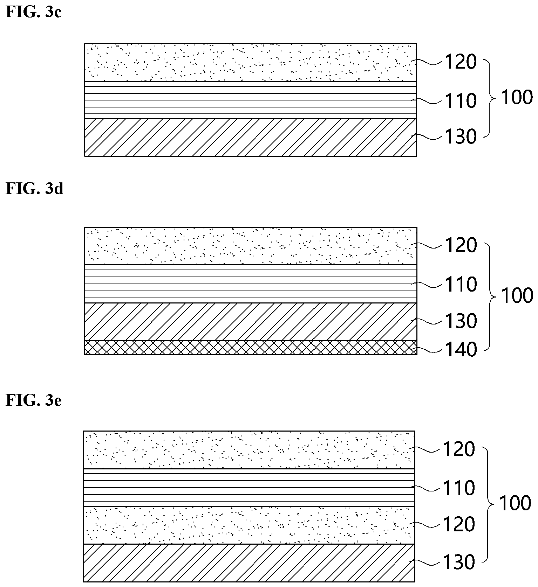

For example, the polarizing plate 100 may include a polarizer 110 and a protective layer 120 laminated on one or both surfaces of the polarizer 110 (see FIGS. 3a and 3b), or may include a polarizer 110, a protective layer 120 laminated on one surface of the polarizer 110, and a retardation matching layer 130 laminated on the other surface opposite to the one surface of the polarizer 110 (see FIG. 3c), or may include a polarizer 110, a protective layer 120 laminated on one surface of the polarizer, and a retardation matching layer 130 and a refractive index-matching layer 140 sequentially laminated on the other surface opposite to the one surface of the polarizer 110 (see FIG. 3d), or may include a polarizer 110, a protective layer 120 laminated on one surface of the polarizer, and a protective layer 120 and a retardation matching layer 130 sequentially laminated on the other surface opposite to the one surface of the polarizer 110 (see FIG. 3e).

The polarizer 110 may be a conventional or later-developed polarizer, and may be, for example, a stretched polarizer or a coated polarizer.

In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In one embodiment, the coated polarizer may be formed by a liquid crystal coating composition, wherein the liquid crystal coating composition may include a reactive liquid crystal compound, a dichroic dye, and the like.

The term "reactive liquid crystal compound" may refer to a compound including, for example, a mesogen skeleton and also including one or more polymerizable functional groups. Such reactive liquid crystal compounds are variously known under the name reactive mesogen (RM). The reactive liquid crystal compound may be polymerized by light or heat to form a cured film in which a polymer network is formed while maintaining the liquid crystal alignment.

The reactive liquid crystal compound may be a monofunctional or multifunctional reactive liquid crystal compound. The monofunctional reactive liquid crystal compound may refer to a compound having one polymerizable functional group, and the multifunctional reactive liquid crystal compound may refer to a compound having two or more polymerizable functional groups.

The dichroic dye is a component included in the liquid crystal coating composition to impart polarization properties, and has different absorbances in the major and minor axis directions of the molecule. The dichroic dyes may be a conventional or later-developed dichroic dye, and may include at least one selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective layer 120 serves to protect the polarization characteristics of the polarizer 110 from post-processing and external environments, and may be provided in the form of a protective film, etc.

The protective layer 120 may be formed on and in direct contact with one or both surfaces of the polarizer 110, as shown in FIGS. 3a and 3b, without being limited thereto. For example, the protective layer may have a multi-layer structure in which one or more protective layers are continuously laminated, and may be formed in direct contact with other functional layer(s).

In one or more embodiments, the protective layer 120 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and a cyclic olefin polymer (COP).

The retardation matching layer 130 is intended to match the optical properties of the optical laminate, may be in the form of a retardation film or the like, and may be a conventional or later-developed retardation film. For example, quarter-wave plates or half-wave plates may be used to retard the phase of light, and these may be used alone or in combination.

The retardation matching layer 130 may be formed on and in direct contact with one surface of the polarizer 110, as shown in FIGS. 3c and 3d, without being limited thereto. For example, as shown in FIG. 3e, the retardation matching layer 130 may be formed on one surface of the protective layer 120, so that the polarizer 110, the protective layer 120, and the retardation matching layer 130 may be sequentially laminated.

The retardation matching layer 130 may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform or methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer 130 may be 10 µm to 100 µm in the case of the stretched polymer film, and 0.1 µm to 5 µm in the case of the liquid crystal polymer film.

The refractive index-matching layer 140 is provided to compensate for the refractive index difference of the optical laminate caused by the transparent conductive layer 200, and may serve to improve the viewing characteristics, etc. by reducing the refractive index difference. Furthermore, the refractive index-matching layer 140 may be provided to correct the color caused by the transparent conductive layer 200. Meanwhile, when the transparent conductive layer has a pattern, the refractive index matching layer 140 may compensate for the difference in transmittance between a pattern region with the pattern formed and a non-pattern region where no pattern is formed.

Specifically, the transparent conductive layer 200 is laminated adjacent to other members having a refractive index different therefrom (for example, the polarizer 110, etc.), and the difference in the refractive index between the transparent conductive layer and other layer adjacent thereto may lead to the difference in light transmittance. In particular, if a pattern is formed on the transparent conductive layer, a problem may arise in that the pattern region and the non-pattern region are viewed to be distinguishable from each other. Therefore, the refractive index-matching layer 140 is included to compensate for refractive index, thereby reducing the difference in light transmittance of the optical laminate. In particular, when a pattern is formed on the transparent conductive layer, the refractive index-matching layer 140 prevents the pattern region and the non-pattern region from being viewed to be distinguishable from each other.

In one embodiment, the refractive index of the refractive index-matching layer 140 may be appropriately selected depending on the material of another adjacent member, but is preferably 1.4 to 2.6, more preferably 1.4 to 2.4. In this case, it is possible to prevent light loss caused by a sharp difference in refractive index between the transparent conductive layer 200 and other members such as the polarizer 110.

The refractive index-matching layer 140 is not particularly limited as long as it can prevent the sharp difference in refractive index between the transparent conductive layer 200 and other members such as the polarizer 110, and it may include a compound used in the formation of a conventional or later-developed refractive index matching layers. For example, the refractive index matching layer may be formed from a refractive index-matching layer formation composition including a polymerizable isocyanate compound.

In one embodiment, the polarizing plate 100 may further include other functional layers to assist or enhance the characteristics of the polarizer, in addition to the above-mentioned functional layers and, for example, may further include an overcoat layer, etc. in order to further improve the mechanical durability.

The thickness of each of the functional layers other than the retardation matching layer 130 may be 1 to 30 µm, more preferably 2 to 20 µm. Here, the thickness may refer to the thickness after drying. When each thickness satisfies the above range, each functional layer may perform its function without a problem while thinning is possible.

The transparent conductive layer 200 is provided for driving the liquid crystal layer 300 and may be formed in direct contact with the polarizing plate 100.

For example, as shown in FIG. 1, the first transparent conductive layer 200-1 may be formed in direct contact with the first polarizing plate 100-1, and the second transparent conductive layer 200-2 may be formed in direct contact with the second polarizing plate 100-2.

Conventionally, an optical laminate used to manufacture a smart window, etc. is manufactured by forming a conductive layer for driving liquid crystals on one surface of a substrate and bonding the other surface of the substrate to a polarizing plate. However, the optical laminate according to the present disclosure is characterized in that, since the conductive layer is directly formed on one surface of the polarizing plate without including a separate substrate for forming the conductive layer, the laminate has improved transmittance in a light transmission mode and improved flexural properties while having a reduced thickness.

In one embodiment, the first transparent conductive layer 200-1 and/or the second transparent conductive layer 200-2 formed in direct contact with at least one of the first polarizing plate 100-1 and the second polarizing plate 100-2 shares a contact surface with the first polarizing plate 100-1 and/or the second polarizing plate 100-2, meaning that at least one of the transparent conductive layers is formed on the polarizing plate without including a separate substrate. For example, the first transparent conductive layer 200-1 and/or the second transparent conductive layer 200-2 may be deposited and formed on the upper surface of a coating layer formed on the first polarizing plate 100-1 and/or the second polarizing plate 100-2. In this case, the first transparent conductive layer 200-1 and/or the second transparent conductive layer 200-2 may be formed in direct contact with a pretreated surface of the polarizing plate after performing pre-treatment such as corona treatment or plasma treatment on one surface of the polarizing plate in order to improve the adhesion thereof to at least one of the first polarizing plate 100-1 and the second polarizing plate100-2. The pre-treatment is not limited to corona treatment or plasma treatment, and may be performed using any conventional or later-developed pre-treatment process within a range that does not impair the purpose of the present disclosure.

In another embodiment of the present disclosure, the first transparent conductive layer 200-1 and/or the second transparent conductive layer 200-2, which are/is formed in direct contact with at least one of the first polarizing plate 100-1 and the second polarizing plate 100-2, may be formed in direct contact with the polarizing plate with a highly adhesive layer (not shown; formed on one surface of the polarizing plate) interposed therebetween in order to improve the adhesion between the transparent conductive layer and the polarizing plate. The highly adhesive layer may be formed using a conventional or later-developed pressure-sensitive adhesive. In one or more embodiments, the pressure-sensitive adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, the pressure-sensitive adhesive may preferably be an acrylic pressure-sensitive adhesive from the viewpoint of easy availability, etc., and may include, for example, a (meth)acrylate copolymer, a crosslinking agent, and a solvent, etc.

The polarizing plate 100 may have a thickness of 30 to 200 µm, preferably 30 to 170 µm, more preferably 50 to 150 µm. In this case, the polarizing plate 100 may be prevented from lifting when bonded to glass for application to a smart window while maintaining its optical characteristics, and it is possible to prevent the thickness of the smart window from increasing.

The transparent conductive layer 200 may be formed on one surface of the polarizing plate 100 by a deposition and coating method commonly used in art. For example, it may be formed by an appropriate process selected from coating processes such as a spin coating process, a roller coating process, a bar coating process, a dip coating process, a gravure coating process, a curtain coating process, a die coating process, a spray coating method, a doctor coating method, a kneader coating method, etc.; printing (application) processes such as a screen printing process, a spray printing process, an inkjet printing process, an iron plate printing process, an intaglio printing process, a flat printing process, etc.; and deposition processes such as a chemical vapor deposition (CVD), physical vapor deposition (PVD), plasma-enhanced chemical vapor deposition (PECVD), etc.

In the optical laminate of the present disclosure, at least one of the first transparent conductive layer 200-1 and the second transparent conductive layer 200-2 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from a group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), and the like.

Furthermore, the metal may include at least one selected from a group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and alloys containing at least one of these metals, and may include, for example, a silver-palladium-copper (APC) alloy or a copper-calcium (CuCa) alloy.

The carbonaceous material may include at least one selected from the group consisting of carbon nanotubes (CNTs), graphene, and the like.

The conductive polymer may be a conventional or later-developed conductive polymer material. For example, the conductive polymer may include at least one selected from the group consisting of polythiophene, poly(3,4-ethylenedioxythiophene), polyaniline, polyacetylene, polydiacetylene, polyphenylene, polyphenylene vinylene, polyphenylene sulfide, polythienylene vinylene, polythiophene vinylene, polyfluorene, polypyrrole, poly(3,4-ethylenedioxythiophene): polystyrene sulfonate, poly(3,4-ethylenedioxythiophene): camphor sulfonic acid, poly(3,4-ethylenedioxythiophene): toluene sulfonic acid, poly(3,4-ethylenedioxythiophene): dodecylbenzene sulfonic acid, polyaniline: polystyrene sulfonate, polyaniline: camphorsulfonic acid, polypyrrole: polystyrene sulfonate, polypyrrole: camphorsulfonic acid, polypyrrole: toluenesulfonic acid, polypyrrole: dodecylbenzene sulfonic acid, polythiophene: polystyrene sulfonate, polythiophene: camphorsulfonic acid, polythiophene: toluenesulfonic acid, and polythiophene: dodecylbenzene sulfonic acid, and is preferably poly(3,4-ethylenedioxythiophene).

The conductive ink may be an ink composed of a mixture of metal powder and a curable polymeric binder, and the nanowires may be, for example, silver nanowires (AgNWs).

Furthermore, at least one of the first transparent conductive layer 200-1 and the second transparent conductive layer 200-2 may be formed to have a structure consisting of two or more layers by combining the above-described materials. For example, in order to reduce the reflectivity of incident light and increase the transmittance, at least one of the first transparent conductive layer 200-1 and the second transparent conductive layer 200-2 may be formed to have a two-layer structure including a metal layer and a transparent conductive oxide layer.

The transparent conductive layer 200 of the present disclosure may have an alignment film between the same and the liquid crystal layer 300. The alignment film serves to align the liquid crystal compound, and is preferably photo-oriented. The alignment film may be formed by applying and curing an alignment film coating composition containing an alignable polymer, a photopolymerization initiator, and a solvent. The alignable polymer is not particularly limited, but may be a polyacrylate-based resin, a polyamic acid resin, a polyimide-based resin, a polymer containing a cinnamate group, or the like. In addition, a conventional or later-developed polymer capable of exhibiting alignment properties may be used.

The liquid crystal layer 300 included in the optical laminate of the present disclosure may change the driving mode of the optical laminate to a light transmission mode or a light-blocking mode by adjusting the transmittance of light incident in one or more directions in response to an electric field generated by the transparent conductive layer 200.

The liquid crystal layer 300 may include a liquid crystal compound 320. For example, the liquid crystal layer 300 may be positioned within a space defined by a sealant layer (not shown) and a spacer (not shown), which are provided between the first transparent conductive layer 200-1 and the second transparent conductive layer 200-2 in the light control region.

The liquid crystal compound is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The sealant may include a curable resin as a base resin. As the base resin, a UV-curable resin or a thermosetting resin known in the art that may be used for a sealant may be used. The UV-curable resin may be a polymer of a UV-curable monomer. The thermosetting resin may be a polymer of a thermosetting monomer.

As the base resin of the sealant, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant may further include an initiator, for example, a photoinitiator or a thermal initiator.

The sealant may be formed by a method commonly used in the art, and for example, may be formed by drawing a sealant into the outer peripheral region (i.e., inactive region) of the liquid crystal layer using a dispenser having a nozzle.

The spacer may include at least one of a ball spacer and a column spacer, and is particularly preferably a ball spacer. The ball spacer may include one or more ball spacers, and preferably has a diameter of 1 to 10 µm. In addition, when viewed in a planar direction, the area occupied by the ball spacer in the liquid crystal layer 300 is preferably 0.01 to 10% of the area of the liquid crystal layer 300 in terms of user's visibility and improved transmittance in the light transmission mode.

The liquid crystal layer 300 included in the optical laminate of the present disclosure may include a polymer network as described below, wherein the polymer network may be formed through a crosslinking reaction of a polymerizable compound. In order to maintain the uniform initial orientation of the liquid crystal compound 310 within the liquid crystal layer when forming the polymer network, it is preferable to use an alignment film having strong surface anchoring energy. Methods for forming such an alignment film include a rubbing method using a rubbing process and a photoalignment method using UV light. In general, the photoalignment method has a weaker surface anchoring energy than the rubbing method. More specifically, the alignment film formed by the rubbing method has a surface anchoring energy of about 1 x 10⁻³ J/m², while the alignment film formed by the photoalignment method has a surface anchoring energy of about 1 x 10⁻⁶ J/m². Therefore, in order to maintain the uniform initial alignment of the liquid crystal compound 310 when forming the polymer network within the liquid crystal layer 300, a surface of the second transparent conductive layer 200-2 of the present disclosure, which is in contact with the liquid crystal layer 300, is preferably oriented by rubbing using the rubbing method.

In one embodiment, the transparent conductive layer 200 may have a thickness of 1 µm or less, preferably 10 nm to 500 nm, more preferably 30 nm to 200 nm. In this case, the transparent conductive layer 200 ensures a predetermined transmittance, does not greatly change its characteristics by external stress, and enables the manufacturing of an optical laminate with a small thickness.

The liquid crystal layer 300 may include a polymer network and a liquid crystal compound 310. For example, the liquid crystal layer 300 may be positioned within a space defined by the polymer network between the first transparent conductive layer 200-1 and the second transparent conductive layer 200-2 in the light control region.

In order to maintain a certain space, i.e., a cell gap, in which the liquid crystal compound is provided within the liquid crystal layer as described above, a sealant and a spacer necessarily need to be included. However, if a column spacer is included within the liquid crystal layer to maintain the cell gap, there are problems in that the manufacturing process becomes more complicated, which increases the manufacturing cost, and the transmittance changes as the alignment film is damaged in the process of forming the spacer by irradiating the photoresist with UV light. In addition, if a ball spacer is used to maintain the cell gap of the liquid crystal layer, there are problems in that it is impossible to maintain a uniform cell gap, making it difficult to maintain a constant in-plane optical color, and a short circuit occurs in the optical laminate. In addition, if a sealant is used to maintain the cell gap of the liquid crystal layer, there are problems in that the appearance quality may deteriorate due to visibility of the sealant, the sealant may burst during handling of the optical laminate, or a defect may occur due to a difference in thickness from the spacer included together therewith.

As the liquid crystal layer 300 includes the polymer network together with the liquid crystal compound 310, it enables the cell gap of the liquid crystal layer to be appropriately maintained without including a separate sealant and/or spacer. In addition, since the cell gap is maintained by the polymer network alone rather than by a combination of the sealant and the spacer, there is an advantage in that a defect caused by the difference in thickness between the sealant and the spacer may be fundamentally blocked.

The liquid crystal compound 310 is not particularly limited as long as it is driven in response to an electric field and is capable of controlling the light transmittance, and a conventional or later-developed liquid crystal compound may be used. For example, the contents regarding the reactive liquid crystal compound of the above-described coated polarizer may be equally applied to the liquid crystal compound.

The liquid crystal compound may include a chiral nematic (cholesteric) liquid crystal compound, wherein the chiral nematic liquid crystal compound may include a nematic liquid crystal compound and a chiral compound.

In the nematic liquid crystal compound, long-rod-shaped molecules are arranged parallel to each other, and there is no regularity in the center position of the molecules, but the molecules are ordered in the axial direction. Each molecule of the nematic liquid crystal compound may move freely in the long-axial direction, and thus the viscosity is low and the fluidity is good. Since the orientation of each molecule is almost equal up and down, the polarization cancels out and the liquid crystal compound generally does not exhibit ferroelectricity. The type of nematic liquid crystal compound is not particularly limited, and any compound that contains a mesogenic group may be used without limitation.

Chiral compounds are compounds whose three-dimensional structures are symmetrical to each other like the relationship between the left and right hands, and although they have the same chemical structure and physical properties, they have different three-dimensional structures because they are mirror images of each other. When a certain amount of a chiral compound is contained in the nematic liquid crystal compound, it induces a helical pitch. As the type of chiral compound, any chiral compound may be used without particular limitation as long as it can induce a desired helical pitch without damaging the liquid crystal properties of the liquid crystal compound, for example, nematic regularity.

The chiral compound for inducing a helical pitch in the liquid crystal compound 310 needs to contain at least chirality in its molecular structure. Examples of the chiral compound include a compound having one or more asymmetric carbons, a compound having an asymmetric point on a heteroatom, such as a chiral amine or chiral sulfoxide, or a compound having an axially asymmetric, optically active site, such as cumulene or binaphthol.

The chiral compound may be, for example, a low-molecular-weight compound having a molecular weight of 1,500 or less. For example, as the chiral compound, a commercially available chiral nematic liquid crystal, for example, a chiral dopant liquid crystal S-811 commercially available from Merck or Paliocolor LC 756 (manufactured by BASF) may be used, without being limited thereto.

The chiral nematic liquid crystal compound may contain, based on the total weight of the chiral nematic liquid crystal compound, 75 to 99 wt% of the nematic liquid crystal compound and 1 to 25 wt% of the chiral compound, without being limited thereto. The helical pitch of the chiral nematic liquid crystal compound may be controlled by appropriately adjusting the content of the nematic liquid crystal compound and the chiral compound within the above ranges. The pitch of the chiral nematic liquid crystal compound is not particularly limited, but may be 5 to 20 µm.

The liquid crystal driving mode of the liquid crystal layer 300 is not particularly limited, and examples thereof include twisted nematic (TN) mode, super-twisted nematic (STN) mode, in-plane switching (IPS) mode, fringe-field switching (FFS) mode, electrically controlled birefringence (ECB) mode, and vertical alignment (VA) mode. Twisted nematic (TN) mode is preferably used in terms of light transmittance control.

The liquid crystal layer 300 of the present disclosure includes a polymer network and the liquid crystal compound 310, wherein the liquid crystal compound 310 is arranged with uniform initial alignment. The liquid crystal layer 300 of the present disclosure is different from a conventional polymer dispersed liquid crystal (PDLC) in that it includes the polymer network and at the same time, the liquid crystal compound 310 included therein exists mixed with the polymer network without existing in droplet or capsule form and is arranged with uniform initial alignment in the liquid crystal layer. Accordingly, the liquid crystal layer 300 of the present disclosure, which includes the polymer network and the liquid crystal compound 310 arranged with uniform initial arrangement can switch between a light transmission mode and a light-blocking mode by controlling the transmittance of light incident in one or more directions in response to an electric field generated by the transparent conductive layer 200. Therefore, the liquid crystal layer 300 can exhibit a superior light-blocking rate compared to the conventional polymer dispersed liquid crystal that switches to the light-blocking mode by scattering incident light. In addition, the optical laminate of the present disclosure can switch the light-blocking mode without voltage application by appropriately adjusting the transmission axis of the polarizing plate 100 and the optical axis of the liquid crystal layer 300, and also has an advantage of reducing power consumption compared to the conventional polymer dispersed liquid crystal in that the applied voltage required for driving is lower than that of the conventional polymer dispersed liquid crystal in which liquid crystals are arranged in a disorderly manner.

The liquid crystal layer 300 may include a cured product of a composition for forming a liquid crystal layer including a polymerizable monomer and a liquid crystal compound.

The polymerizable monomer refers to a compound that forms a polymer network by a photopolymerization reaction or a thermal polymerization reaction, and is not particularly limited. The polymerizable monomer may include, for example, an acrylate-based monomer, which is at least one selected from the group consisting of isobornyl acrylate, caprolactone acrylate, triethylene glycol diacrylate, trimethylolpropane triacrylate, pentaerythritol triacrylate, and dipentaerythritol pentaacrylate.

The polymerizable monomer may include at least one monomer selected from monofunctional to tetrafunctional monomers, and preferably, may include a trifunctional monomer. The multifunctional monomer has the advantage of not impacting the liquid crystal, having excellent compatibility with the liquid crystal, and being able to exhibit appropriate phase separation from the liquid crystal.

The composition for forming a liquid crystal layer may contain the polymerizable monomer in an amount of 10 to 30 wt%, preferably 10 to 20 wt%, based on the total weight of the composition. When the composition for forming a liquid crystal layer contains the polymerizable monomer in an amount within the above content range, there are advantages in that the degree of curing of the polymer network formed therefrom is sufficient, so that the cell gap of the liquid crystal layer may be stably maintained, and excellent light transmittance and adhesion may be obtained, which is preferable.

The method of forming the liquid crystal layer 300 using the composition for forming a liquid crystal layer is not particularly limited. For example, the liquid crystal layer 300 may be formed by applying the composition for forming a liquid crystal layer onto the second transparent conductive layer 200-2 whose surface has been oriented by rubbing, and then photocuring or thermally curing the same.

Although the optical laminate according to the present disclosure can maintain a stable cell gap even without including a sealant and a spacer by including the polymer network in the liquid crystal layer 300, it may if necessary, further include one or more of a sealant and a spacer within a range that does not impair the purpose of the present disclosure.

The optical laminate of the present disclosure may further include other members within a range that does not impair the purpose of the present disclosure. For example, it may further include a pressure-sensitive adhesive layer, a UV-absorbing layer, a hard coating layer, or the like.

The UV-absorbing layer is not particularly limited as long as it prevents UV-induced deterioration of the optical laminate. Examples of the UV absorber forming the UV-absorbing layer include salicylic acid-based UV absorbers (phenyl salicylate, p-tert-butyl salicylate, etc.), benzophenone-based UV absorbers (2,4-dihydroxybenzophenone, 2,2'-dihydroxy-4,4'-dimethoxybenzophenone, etc.), benzotriazole-based UV absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-l-phenylethyl)-5'-(1,1,3,3-tetramethylbutyl)-phenyl)benzotriazole, 2-(2H-benzotriazol-2-yl)-6-(linear and branched-chain dodecyl)-4-methylphenol, a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenyl acrylate, ethyl-2-cyano-3-(3',4'-methylenedioxyphenyl)-acrylate, etc.), triazine-based UV absorbers, and the like. Thereamong, a benzotriazole-based UV absorber or a triazine-based UV absorber, which has high transparency and an excellent effect of preventing deterioration of the polarizing plate or the transmittance variable layer, is preferable, and a benzotriazole-based UV absorber having a more appropriate spectral absorption spectrum is particularly preferable. The benzotriazole-based UV absorber may be a bis(benzotriazole) compound, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

The hard coating layer is not particularly limited as long as it serves to protect members such as the polarizing plate and the transmittance variable layer from external physical or chemical impacts, and a hard conventional or later-developed hard coating layer may be used.

In one embodiment, the hard coating layer may be formed by applying a composition for forming a hard coating layer onto another member and then curing the same with light or heat. The composition for forming a hard coating layer is not particularly limited and may include, for example, a photocurable compound and a photoinitiator.

As the photocurable compound and the photoinitiator, those commonly used in the art may be used without limitation. For example, the photocurable compound may be a photopolymerizable monomer, a photopolymerizable oligomer, or the like, and examples thereof include monofunctional and/or polyfunctional (meth)acrylates. Examples of the photoinitiator include hydroxycyclohexyl phenyl ketone, trimethylbenzoyl diphenylphosphine oxide, acetophenone, oxime ester, etc., and commercially available photoinitiator products include Irgacure-184, TPO, Irgacure-907, etc.

### < Automobile and Window for Building>

The present disclosure includes an automobile in which the smart window is applied to at least one of a front window, a rear window, a side window, a sunroof window, and an interior partition, and a window for a building including the smart window.

Hereinafter, embodiments of the present disclosure will be described in detail. However, the present invention may be embodied in various different forms and should not be construed as being limited to the examples disclosed below. Rather, these examples are provided so that this disclosure will be thorough and complete and will fully convey the concept of the present disclosure to those skilled in the art, and the present invention will only be defined by the scope of the appended claims

### Preparation Example 1: Production of Polarizing Plate

### (1) Swelling Treatment Process

A 60-µm-thick polyvinyl alcohol film (raw film) (manufactured by Kuraray Co., Ltd., trade name: Kurare Poval Film VF-PE#6000, average degree of polymerization: 2,400, degree of saponification: 99.9 mol%) was continuously unwound from a film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls. The stretching ratio with respect to the raw film was set to 2.5 times.

### (2) Dyeing Treatment Process

Next, the film that passed through the nip rolls was dipped in a dyeing bath containing pure water/potassium iodide/iodine/boric acid at a mass ratio of 100/2/0.01/0.3 at 30°C for 120 seconds. In this dyeing treatment process, roll-to-roll stretching (longitudinal uniaxial stretching) was performed by creating a difference in peripheral speed between the nip rolls. The stretching ratio with respect to the film after the swelling treatment process was set to 1.1 times.

### (3) Crosslinking Treatment Process

Next, the film that passed through the nip rolls was dipped in a first crosslinking bath containing pure water/potassium iodide/boric acid at a mass ratio of 100/12/4 at 56°C for 70 seconds. Roll-to-roll stretching (longitudinal uniaxial stretching) was performed by creating a difference in peripheral speed between the nip rolls and the nip rolls provided between the first crosslinking bath and the second crosslinking bath. The stretching ratio with respect to the film after the dyeing treatment process was set to 1.9 times.

### (4) Color Complementing Process

Next, the film after the crosslinking treatment was dipped in a second crosslinking bath containing potassium iodide/boric acid/pure water at a mass ratio of 9/2.9/100 at 40°C 10 seconds.

### (5) Cleaning Treatment Process

Next, the film after the second crosslinking treatment was dipped in a cleaning bath containing pure water at 14°C for 5 seconds, and washed using a shower method with a shower volume of 5 m³/h at a shower temperature of 14°C.

### (6) Drying Treatment Process

Next, the film after the cleaning treatment process was heat-dried at 80°C for 190 seconds by passage through a drying oven, thereby producing a polarizer film. The moisture content after drying was 13.6%, and the thickness of the obtained polarizer film was about 18 µm.

### (7) Bonding Treatment Process

Next, as an adhesive, an aqueous adhesive containing 5 parts by mass of polyvinyl alcohol per 100 parts by mass of water was prepared. Thereafter, a protective film (PET) was laminated on both surfaces of the polarizer film using the prepared UV adhesive. The obtained laminate was exposed to UV light, and the adhesive was cured, thereby producing a first polarizing plate and a second polarizing plate.

### Preparation Example 2: Formation of Transparent Conductive Layers

A composition for forming a PEDOT functional conductive layer was applied onto the protective layers of the first and second polarizing plates, and dried at 90°C for about 5 to 10 minutes to form functional conductive layers, thereby laminating a first transparent conductive layer and a second transparent conductive layer.

Here, as the composition for forming a PEDOT functional conductive layer, a mixture of 0.6 wt% of PEDOT:PSS, 32.4 wt% of ethanol, 40 wt% of deionized water, and 27 wt% of 2-methoxyethanol was used.

### Preparation Example 3: Formation of Alignment Films

Each of the first and second conductive layers formed in Preparation Example 2 was coated with an alignment solution which was then dried (80°C/2 minutes).

Next, the dried alignment solution was irradiated with UV light, thereby forming a first alignment film and a second alignment film.

### Preparation Example 4: Preparation of Polymer-Dispersed Liquid Crystal Molecular Layer

A mixture of ethylene glycol dimethacrylate, 1,6-hexanediol diacrylate, and 3,5,5-trimethylhexyl acrylate was used as a pre-polymer, and a single liquid crystal having bicyclohexylbenzene as a central skeleton and a cyano group as a functional group was used as a liquid crystal molecule. A polymer-dispersed liquid crystal molecule layer was prepared using 25 wt% of the pre-polymer, 70 wt% of the liquid crystal molecules, and 5 wt% of a crosslinking agent.

### Preparation Example 5: Manufacturing of Optical Laminate

A sealant (WORLDROCK No. 7632, Kyoritsu Chemical & Co., Ltd) was formed by drawing on the outer peripheral portion of the first alignment film of the laminate structure including the first polarizing plate, the first transparent conductive layer, and the first alignment film, formed through Preparation Examples 1 to 3. The laminate structure including the first polarizing plate, the first transparent conductive layer and the first alignment film and the laminate structure including the second polarizing plate, the second transparent conductive layer and the second alignment film were bonded to face each other with the sealant and the liquid crystal molecule layer interposed therebetween so that the polymer-dispersed liquid crystal molecule layer prepared in Preparation Example 4 could be formed on a portion of the first alignment film where the sealant was not formed. Then, the polymer-dispersed liquid crystal molecule layer prepared in Preparation Example 4 was introduced into the resulting laminate structure, thereby manufacturing an optical laminate.

### Preparation Example 6: Preparation of Solution for Adhesive Layer

6.5 g of HCl was added to 100 g of an aqueous solution of PVA (Dongyang Chemical Co., Ltd.), followed by stirring, and 1.5 g of butyraldehyde (ACROS Chemical Co., Ltd.) was added thereto. Thereafter, the PVB obtained by stirring at 40°C for 4 hours was filtered using distilled water as a solvent, thereby preparing an adhesive solution.

### Examples and Comparative Examples: Manufacturing of Smart Windows

Smart windows were manufactured according to FIG. 1. Specifically, two 2-mm-thick glass substrates 10-1 and 10-2 (Normal Sodalime Glass, JMC Glass Co., Ltd.) were prepared, and the adhesive layer solution prepared in Preparation Example 6 was applied by bar coating to one surface of each of the glass substrates to a thickness shown in Table 1 below, and then dried in an oven at 30°C for one day, thereby forming a first adhesive layer 20-1 and a second adhesive layer 20-2. The optical laminate 30 manufactured in Preparation Example 5 was positioned and bonded between the first adhesive layer 20-1 and the second adhesive layer 20-2, thereby manufacturing smart windows of Examples 1 to 12 and Comparative Examples 1 to 6, respectively.

The tensile elastic moduli of the first adhesive layer and the second adhesive layer were measured at a measurement speed of 4 mm/min using an autograph AG-X tester (Shimadzu, Japan), and the results are shown in Table 1 below.

### Test Example: Evaluation of Physical Properties

### (1) Evaluation of Malfunction

For the smart windows of the Examples and the Comparative Examples, each smart window was driven by applying a voltage of DC 10V using a SDP30-3D power supply device (Daunanotek Co., Ltd., Korea) and transitioned to a non-driven state by cutting off the voltage. Whether there was a malfunction was determined by checking the light-blocking mode of the smart window when the voltage was applied and the light transmission mode of the smart window when the voltage was not applied. The measurement of the light transmission and blocking modes was performed by measuring the visible light transmittance in the wavelength range of 400 to 700 nm in the light transmission and blocking modes using a transmission meter (SD2400; Samwon Instruments Co., Ltd., Korea). Evaluation was performed according to the evaluation criteria below, and the results are shown in Table 1 below.

### <Malfunction Evaluation Criteria>

∘: a transmittance in light transmission mode of 40% or more and a transmittance in light-blocking mode of 5% or less;
△: a transmittance in light transmission mode of 30% to less than 40% and a transmittance in light-blocking mode of more than 5% to 8% or less;
×: a transmittance in light transmission mode of less than 30% and a transmittance in light-blocking mode of more than 8%.

### (2) Evaluation of Appearance Defects

The appearances of the smart windows of the Examples and the Comparative Examples were visually observed to check for defects such as wrinkles, bubbles, and black spots. The number of defects was counted visually, the size of each defect was checked using an optical microscope (MX61, OLYMPUS), and the size of the largest defect among the defects was recorded. Evaluation was performed according to the following defect evaluation criteria, and the results are shown in Table 1 below.

### <Appearance Defect Evaluation Criteria>

⊚: a defect number of 2 or less / a defect size of 0.1 mm or less;
∘: a defect number of more than 2 to 5 or less / a defect size of more than 0.1 mm to 0.3 mm or less;
△: a defect number of more than 5 to 10 or less / a defect size of more than 0.3 mm to 0.7 mm or less;
×: a defect number of more than 10 / a defect size of more than 0.7 mm.

**[Table 1]**

| | Optical | First adhesive layer | | Second adhesive layer | | Ratio of thickness | Malfunction | Appearance |
|---|---|---|---|---|---|---|---|---|
| | laminate | | | | | of each adhesive layer to thickness of optical laminate | | defects |
| | Thickness (mm) | Thickness (mm) | Elastic modulus (MPa) | Thickness (mm) | Elastic modulus (MPa) | | | |
| Example 1 | 0.15 | 0.3 | 15.2 | 0.3 | 15.2 | 2.0 | ○ | ⊚ |
| Example 2 | 0.3 | 0.6 | 24.8 | 0.6 | 24.8 | 2.0 | ○ | ⊚ |
| Example 3 | 0.4 | 0.8 | 28.3 | 0.8 | 28.3 | 2.0 | ○ | ⊚ |
| Example 4 | 0.15 | 0.45 | 15.8 | 0.45 | 15.8 | 3.0 | ○ | ⊚ |
| Example 5 | 0.3 | 0.9 | 28.1 | 0.9 | 28.1 | 3.0 | ○ | ⊚ |
| Example 6 | 0.4 | 1.2 | 29.6 | 1.2 | 29.6 | 3.0 | ○ | ⊚ |
| Example 7 | 0.15 | 0.25 | 15.7 | 0.25 | 15.7 | 1.7 | ○ | ○ |
| Example 8 | 0.3 | 0.5 | 23.5 | 0.5 | 23.5 | 1.7 | ○ | ○ |
| Example 9 | 0.4 | 0.7 | 25.0 | 0.7 | 25.0 | 1.8 | ○ | ○ |
| Example 10 | 0.15 | 0.5 | 23.5 | 0.5 | 23.5 | 3.3 | ○ | ○ |
| Example 11 | 0.3 | 1 | 27.7 | 1 | 27.7 | 3.3 | ○ | ○ |
| Example 12 | 0.4 | 1.3 | 29.4 | 1.3 | 29.4 | 3.3 | ○ | ○ |
| Comp. Example 1 | 0.15 | 0.2 | 10.9 | 0.2 | 10.9 | 1.3 | X | X |
| Comp. Example 2 | 0.3 | 1.2 | 29.6 | 1.2 | 29.6 | 4.0 | △ | X |
| Comp. Example 3 | 0.4 | 0.5 | 23.5 | 0.5 | 23.5 | 1.3 | X | X |
| Comp. Example 4 | 0.15 | 0.7 | 25.0 | 0.7 | 25.0 | 4.7 | △ | X |
| Comp. Example 5 | 0.3 | 0.4 | 15.8 | 0.4 | 15.8 | 1.3 | X | X |
| Comp. Example 6 | 0.4 | 1.5 | 35.8 | 1.5 | 35.8 | 3.8 | △ | X |

Referring to the above test results, it could be confirmed that, in the case of the Examples in which the ratio of the thickness of each of the first adhesive layer and the second adhesive layer to the thickness of the optical laminate was 1.5 to 3.5, the function of the smart window in the light transmission and light-blocking modes was excellent, and the generation of defects such as wrinkles, bubbles, and black spots could be minimized.

In contrast, it could be confirmed that, in the case of the Comparative Examples in which the ratio of the thickness of each of the first adhesive layer and the second adhesive layer to the thickness of the optical laminate was outside of the range of 1.5 to 3.5, the function of the smart window in the light transmission and light-blocking modes was reduced, and the number and size of generated defects such as wrinkles, bubbles, and black spots significantly increased.

## Claims

1. A smart window comprising:
a first substrate;
a first adhesive layer formed on the first substrate;
a second substrate opposite to the first substrate;
a second adhesive layer formed on one surface of the second substrate and opposite to the first adhesive layer; and
an optical laminate embedded between the first adhesive layer and the second adhesive layer,
wherein the optical laminate comprises: a first polarizing plate; a first transparent conductive layer formed on one surface of the first polarizing plate; a second polarizing plate opposite to the first polarizing plate; a second transparent conductive layer formed on one surface of the second polarizing plate and opposite to the first transparent conductive layer; and a liquid crystal layer provided between the first transparent conductive layer and the second transparent conductive layer,
wherein a ratio of a thickness of each of the first adhesive layer and the second adhesive layer to a thickness of the optical laminate is 1.5 to 3.5.

2. The smart window of claim 1, wherein the optical laminate has a thickness of 0.15 mm to 0.4 mm.

3. The smart window of claim 1 or 2, wherein the first substrate and the second substrate comprise at least one selected from the group consisting of silicon, quartz, glass, polymer resin, a metal, a metal oxide, and a non-metal oxide.

4. The smart window of one of claims 1 to 3, wherein the first adhesive layer and the second adhesive layer each have an elastic modulus of 1 to 300 MPa.

5. The smart window of one of claims 1 to 4, wherein at least one of the first polarizing plate and the second polarizing plate comprises at least one functional layer selected from the group consisting of a protective layer, a retardation matching layer, and a refractive index-matching layer.

6. The smart window of one of claims 1 to 5, wherein at least one of the first polarizing plate and the second polarizing plate has a thickness of 30 to 200 µm.

7. The smart window of one of claims 1 to 6, wherein at least one of the first transparent conductive layer and the second transparent conductive layer is formed in direct contact with any one of the first polarizing plate and the second polarizing plate without comprising a separate substrate therebetween.

8. The smart window of one of claims 1 to 7, wherein at least one of the first transparent conductive layer and the second transparent conductive layer is formed in direct contact with any one of the first polarizing plate and the second polarizing plate while comprising a highly adhesive layer therebetween.

9. The smart window of one of claims 1 to 8, wherein at least one of the first transparent conductive layer and the second transparent conductive layer comprises at least one selected from the group consisting of a transparent conductive oxide, a metal, a carbonaceous material, a conductive polymer, a conductive ink, and nanowires.

10. The smart window of one of claims 1 to 9, wherein a liquid crystal driving mode of the liquid crystal layer is any one selected from the group consisting of a twisted nematic (TN) mode, a super-twisted nematic (STN) mode, an in-plane switching (IPS) mode, a fringe-field switching (FFS) mode, and a vertical alignment (VA) mode.
